# EUROPEAN PATENT APPLICATION

(11) **EP 4 783 126 A1**
(43) Date of publication of application: **29.07.2026**
(21) Application number: 26151143.0
(22) Date of filing: 09.01.2026
(51) Int. Cl.: G06V 20/58, G06V 10/774, G06N 3/088, G06V 10/776, G06V 10/82

(54) **PREDICTING TRAINED MODEL VULNERABILITIES USING GENERATIVE IMAGE EDITING AND ANOMALY DETECTION**

(30) Priority: 24.01.2025 US 202563749397 P; 24.01.2025 US 202563833873 P
(71) Applicant: GDM Holding LLC, Mountain View, CA 94043 (US)
(72) Inventor: SINDHWANI, Vikas, New York (US); SINGH, Sumeet, New York (US); MAJUMDAR, Anirudha, New Jersey (US); SHARMA, Mohit, New York (US); KALASHNIKOV, Dmitry, New Jersey (US)
(74) Representative: Thorniley, Peter

(57) **Abstract**

Implementations enable efficient identification of model vulnerabilities and subsequent model improvement without extensive real-world testing, leading to more robust and reliable models. Some implementations are directed to causing a training image to be processed to generate a synthetic image that includes one or more variations to the training image. The training image is one based on which a model has been trained. The variations in the synthetic image can include various changes, such as adding a new object, changing lighting, modifying the background, or altering the position of an object. The synthetic image is processed, using the model, to generate output. This output is then processed to determine whether the synthetic image is an outlier for the model. In response to determining that the synthetic image is an outlier for the model, remediating action(s) are performed, such as causing the model to be further trained based on the synthetic image.

## Description

### BACKGROUND

Trained models, such as trained generative models or other trained neural network models, have been trained and utilized for various purposes. For example, various policy models have been proposed that are trained to process input data (e.g., image(s), user input(s), state(s) of an environment, and/or other input data) to generate corresponding output data that can be used for one or more purposes such as autonomous control of a robotic device, autonomous control of a software application, autonomous control of Internet of Things (IoT) devices, and/or other purpose(s). For example, a robotic policy model can be trained to process a sequence of environmental image(s) from a camera of the robotic device and/or other sensor data from the robotic device to predict a sequence of actions to be performed by the robotic device to perform a task (e.g., pick up a package, grasp a cup, navigate around obstacles, navigate to a destination, and/or other task(s)). As another example, a software policy model can be trained to process a sequence of screen shots of a user interface of an application and/or a sequence of structured state data provided by the application to predict a sequence of actions to be provided in the user interface to perform a task (e.g., provide input(s) to the application, navigate to different parts of the user interface, and/or other task(s)). A policy model can be a neural network model such as a diffusion model, a transformer model, and/or other type of neural network model.

As yet another example, other generative models, such as image generation models (e.g. Imagen-3), video generation models (e.g. Veo), vision-language models (e.g. Flamingo), and multi-modal input and/or output models (e.g. Gemini) have been proposed and trained for various purposes. For instance, image generation models have been trained to process input data (e.g., natural language and/or a base image) to generate output that reflects a generative synthetic image that can be rendered as output to a user and/or provided to a separate neural network model (e.g., a robotic policy model) and/or to a separate system (e.g., a robotic planning system). As another instance, multi-modal models have been proposed that have been trained to process multi-modal input data, such as input data that includes image(s), text, and/or audio, and to generate output data such as multi-modal output data that includes text, synthesized audio, and/or synthetic image(s).

Many trained models are fairly robust, providing effective performance for a wide variety of inputs including inputs that vary from those on which the model has been trained. However, many trained models can fail to provide effective performance for various inputs. For example, consider a policy model that processes a sequence of images of a robot's environment to generate a sequence of robotic actions to pick up object(s) in the environment, and that was trained using images from imitation learning episodes that all include a pink floor. Such a policy model can have a high success rate for picking up objects in environments that also have a pink floor. However, such a policy model can have a low success rate for picking up objects in environments that have a blue floor, despite the environments otherwise being similar to those of the imitation learning episodes. Attempts to improve robustness of trained models have been proposed and include generating and training on diverse data sets. However, generating the diverse data sets can be computationally burdensome and/or require significant time. Further, some of the diverse data sets may provide minimal improvements in the robustness of the trained models. Put another way, some data that is generated with the intent of being diverse may not be impactfully diverse and training on such data can have negligible positive influence (or even negative influence) on the robustness of the trained models. Accordingly, training on such data can be computationally wasteful and even counterproductive in some situations.

Separately, some inference time techniques have been proposed that seek to recognize when current input, that is slated for processing by a trained model, is sufficiently different from training data on which the trained model was trained, such that output(s) predicted using the trained model can lead to undesirable result(s). For example, some of those techniques can train and utilize a separate model that can process current input to generate output that indicates whether it is similar enough to training data on which the trained model was trained. Responsive to recognizing that the current input is sufficiently different, the inference time techniques can prevent utilization of the trained model for the current conditions. While this can be useful to prevent generation and/or implementation of potentially incorrect output(s) (e.g., action(s) of trained policy model(s)), it also prevents utilization of the trained model for performance of task(s) for which it was trained, limiting the utility and benefit thereof.

### SUMMARY

Implementations disclosed herein are directed to processing, utilizing an initially trained model, a generated synthetic image to determine whether the synthetic image is an outlier for the model. Those implementations further, in response to determining that the synthetic image is an outlier for the model, cause one or more corresponding remediating action(s) to be performed that can increase robustness of the model. For example, the corresponding remediating action(s) can include: further training the model based on the synthetic image; further training the model based on additional generated synthetic image(s) that have feature(s) of the synthetic image (e.g., if the synthetic image was generated to include a "blue carpet", cause generation of additional synthetic image(s) having "blue carpet"); preventing utilization of the model in condition(s) where feature(s) of the synthetic image are present (e.g., prevent use of model in environment(s) having the feature(s)); utilizing the feature(s), of the synthetic image, in determining whether to select the model, from among multiple models, as more likely to meet deployment needs (e.g., the model can be less likely to be selected if the deployment is in an environment likely to include the feature(s)); and/or other remediating action(s).

Many implementations, in response to determining that the synthetic image is not an outlier for the model, bypass performance of one or more (e.g., all) of the corresponding remediating action(s) that would otherwise be performed had the synthetic image been determined to be an outlier. In these and other manners, corresponding remediating action(s) are not performed in situations in which they would not increase, or only minimally increase, the robustness of the model. This can prevent computationally wasteful, and even potentially counterproductive, performance of certain remediating action(s). Put another way, implementations seek to first verify that a synthetic image is an outlier of a model prior to the performance of any remediating action(s) that are based on the synthetic image, thereby ensuring that such remediating action(s) will be impactful.

In determining whether a synthetic image is an outlier for a model, one or more objective criteria, such as those described in detail herein, can be utilized. For example, the synthetic image can be processed, utilizing the model, to generate output and the output can be processed to determine whether the synthetic image is an outlier for the model. For instance, the output can be an embedding generated as intermediate output of an intermediate layer of the model (e.g., a non-terminal neural network layer of a neural network model), and processing the output to determine whether the synthetic image is an outlier for the policy model can involve generating a distance measure between the embedding and one or more prior embeddings. The prior embedding(s) can be, for example, generated as prior intermediate output, of the intermediate layer, based on processing of one or more training images used in the initial training of the model. For example, a prior embedding can be generated based on processing, utilizing the initially trained policy model, a training image on which the policy model was initially trained.

Processing the output to determine whether the synthetic image is an outlier for the model can optionally further involve comparing the distance measure to a threshold and determining that the synthetic image is an outlier in response to determining that the distance measure satisfies the threshold. In some implementations, the threshold can be determined based on one or more additional prior embeddings generated, as additional prior intermediate output, of the intermediate layer, based on processing of one or more held-out images that are in addition to the one or more training images. For example, the hold-out images can be non-synthetic image(s) that are hold-outs from training data utilized in initially training the model. For example, 10,000 instances of training data can be available for training the model, the model trained based on 950 of those training instances, and the held-out images, used in generating the additional prior embeddings, can be the remaining 50 instances of training data that were not among the 950 utilized in training the model. As a particular example, the distance measure can be an anomaly score generated by calculating the mean of the k-nearest neighbor cosine distances between an embedding, generated based on processing the synthetic image using the model, and the prior embeddings of all training images utilized in initial training of the model. In determining whether the anomaly score indicates an anomaly or outlier, it can be compared to a threshold, τ, determined using conformal prediction on the held-out images.

Various implementations disclosed herein are directed to causing a training image to be processed to generate a synthetic image that includes one or more variations to the training image. The training image is one based on which a model has been trained. The variations in the synthetic image can include various changes, such as adding a new object, changing the lighting, modifying the background, or altering the position of an object. The synthetic image is processed, using the model, to generate output. This output is then processed to determine whether the synthetic image is an outlier for the model. In response to determining that the synthetic image is an outlier for the model, remediating action(s) are performed, such as causing the model to be further trained based on the synthetic image.

As a non-limiting example of some of those various implementations, consider a robotic policy model trained for use in controlling a robotic arm to grasp objects. The training data used to train the robotic policy includes imitation learning episodes each including a corresponding sequence of images depicting corresponding objects on a pink mat and corresponding human directed robotic actions performed to grasp those objects. A synthetic image can be generated by causing a training image, from the training data, to be processed using an image editing tool to change the color of the mat from pink to yellow, while maintaining all other aspects of the image (e.g., object(s) position(s), lighting, etc.) constant. This synthetic image is then processed using the policy model, resulting in output, such as an intermediate embedding vector from an intermediate neural network layer of the policy model. This embedding is compared to prior embedding(s) that are generated based on processing the training images using the policy model. If the distance between the synthetic image's embedding and the prior embedding(s) exceeds a threshold (e.g., one determined using conformal prediction based on held-out training data), the synthetic image is flagged as an outlier. Because it is an outlier, the policy model is then further trained using this synthetic image, and potentially others generated with the same and/or similar variation(s), to improve performance of the policy model in scenarios with red mats.

Various implementations disclosed herein are additionally or alternatively directed to, after initial training of a model, causing generation of a synthetic image with one or more particular features. The synthetic image can be generated as a variation of a training image or, alternatively, generated independent of any training image. The synthetic image is processed by the model to produce output, which is then processed to determine if the synthetic image is an outlier. If the synthetic image is determined to be an outlier, additional synthetic images with the same one or more particular features are generated, and the model is further trained using these additional synthetic images. The model is also optionally further trained using the synthetic image. Accordingly, in those various implementations, synthetic image(s) with particular feature(s) are generated and those synthetic image(s) are processed to determine whether they are outliers. In response to determining that any of, or a threshold percentage of (e.g., 60%, 70%, 80%, or other percentage of), the synthetic image(s) with the particular feature(s) are outliers, then remediating action(s) can be performed based on the particular feature(s). For example, further training of the model can be performed based on those synthetic images and/or additional synthetic images generated to include the particular feature(s).

As a non-limiting example of some of those various implementations, consider a self-driving car policy model trained to navigate city streets. The policy model has been initially trained on a large dataset of images and sensor data from various city environments. After initial training, a synthetic image is generated depicting a street scene with a newly placed construction barrier, a feature not present (or minimally present) in the initial training data. The policy model processes this synthetic image, generating an output embedding. This embedding is compared to embeddings, generated using the policy model and based on the initial training data, to generate a distance measure. If the distance measure exceeds a threshold, indicating the synthetic image is an outlier, additional synthetic images are generated, each depicting the street scene with the construction barrier in slightly different positions or orientations. The policy model is then further trained using these additional synthetic images, enhancing its ability to handle unexpected obstacles like construction barriers during actual navigation.

Implementations disclosed herein can mitigate (e.g., eliminate) various drawbacks with current techniques. For example, the generation of synthetic images allows for the creation of diverse datasets without the need for extensive and time-consuming real-world data collection. As another example, the use of outlier detection allows for the identification of vulnerabilities in the policy model without requiring the deployment of a robot or other agent in potentially hazardous or undesirable conditions. As another example, the further training of the policy model based on outlier synthetic images directly addresses the weaknesses of the policy model in the identified conditions, leading to improved robustness and generalization capabilities.

As referenced above, in some implementations, if a synthetic image is deemed not an outlier, further training of the model based on that image is skipped. This avoids unnecessary further training when the synthetic image doesn't represent a significant anomaly for the initially trained model. In some of those implementations, if the synthetic image is deemed not an outlier, further training of the model on other synthetic images, that include the same variation(s) or feature(s) as the synthetic image, is also skipped. For example, if the synthetic image is one of multiple synthetic images generated to include one or more particular feature(s) and less than a threshold percentage of those multiple synthetic images are determined to be outliers, further training of the model using those multiple synthetic images, and/or other synthetic images that include those one or more particular feature(s), is not performed. In some versions of those implementations, if a synthetic image having particular feature(s) is deemed not an outlier, or a threshold percentage of (e.g., 60%, 70%, 80%, or other percentage of) synthetic image(s) have the same particular feature(s) are deemed not outliers, then the particular feature(s) can be defined as particular feature(s) for which the model is robust. For example, the particular feature(s) can be assigned as robust feature(s) for the model and utilized in selecting the model for deployment in condition(s) where those feature(s) are present or likely to be present.

As also referenced above, in various implementations, in determining whether a synthetic image is an outlier, an embedding is utilized that is generated from processing the synthetic image using the model. The embedding can be, for example, from an intermediate layer of the policy model. The determination of whether a synthetic image is an outlier can optionally further involve comparing a distance measure, between the embedding and prior embeddings from training images, to a predetermined threshold. If the distance measure exceeds the threshold, the synthetic image is considered an outlier. For example, a large distance could indicate that the synthetic image contains an object or scene feature significantly different from those in the training data. The threshold itself might be calculated based on a separate set of validation images to control the false positive rate. In some cases, the policy model is a diffusion model, and the embedding used is the context vector provided to the denoising process. This leverages the internal representation of the diffusion model to assess the synthetic image.

In some implementations, the generation of the synthetic image that is a variant of a training image can involve providing, to an image editing tool, a natural language prompt along with the training image. The natural language prompt describes the desired alteration to a training image and optionally instructs that only the alteration be made to the training image and/or that all other aspects of the training image be preserved. For instance, the natural language prompt could be "change the color of the mat to red, but keep all other aspects of the image the same such as maintaining all other objects the same and the lighting the same". In some of those and/or other implementations, multiple candidate synthetic images might be generated from the same prompt, and a vision-language model can be used to select the best candidate from among the multiple candidate synthetic images. As an example, assume the natural language prompt provided to the image editing tool, along with a training image, to generate the synthetic images was "change the color of the mat to red, but keep all other aspects of the image the same such as maintaining all other objects the same and the lighting the same", and that four candidate synthetic images were provided. A vision-language model prompt can then be generated that includes the training image, the four candidate synthetic images, and a natural language prompt of the form "choose, from among the four candidate synthetic images, the one that most accurately represents the training image while also including the desired alteration described by the natural language prompt: 'change the color of the mat to red, but keep all other aspects of the image the same such as maintaining all other objects the same and the lighting the same'". Output generated by the vision-language model in response to this prompt can then be utilized to select one of the candidate synthetic images as the synthetic image. For example, the output can reflect one of the four candidate synthetic images (e.g., an identifier thereof) and that reflected one selected as the best candidate.

In some implementations, further training of a model using a synthetic image can include unsupervised training, supervised training, semi-supervised training, and/or other training. In some implementations where a synthetic image is generated as a variant of a training image and the training image is one that, during initial training of the model, was associated with a supervised label, then the further training using synthetic images can be performed based on the associated supervised label. For example the supervised label for the synthetic image can be the same as, or a variant of, the supervised label for the training image on which it was generated. This can obviate the need to generate an additional supervised label for the synthetic image, which can be resource intensive and/or time consuming.

In some implementations where a synthetic image is generated as a variant of a training image and the training image is one that is part of an imitation learning episode including a sequence of training images and a sequence of corresponding actions, additional training images from the same episode can be processed to generate additional synthetic images with the same or similar variation as the synthetic image. For example, where a natural language prompt and the training image were provided to an image editing tool to generate the synthetic image, additional training images can each be generated by providing the same natural language prompt, and a corresponding additional training image, to the image editing model. Optionally, supervised label(s) from the imitation learning episode can be utilized for the synthetic image and the additional synthetic images.

Although some examples, such as those in the appended paper, are described with respect to a robotic policy model, it is understood that various implementations can be utilized with various non-robotic policy models to improve robustness thereof. Such non-robotic policy models can include, for example, a policy model utilized to control a computer application, a policy model utilized to control an autonomous vehicle, or a policy model utilized to cause action(s) to be performed in response to detecting certain event(s) in a video stream. It is further understood that various implementations can be utilized with various non-policy models, such as generative models or other neural network models that are not policy models. Such models can include image generation models (e.g. Imagen-3), video generation models (e.g. Veo), vision-language models (e.g. Flamingo), and multi-modal input and/or output models (e.g. Gemini).

Some implementations include a transitory or non-transitory computer readable storage medium storing instructions executable by a processor to perform a method such as one or more of the methods described herein. Some implementations include a system including memory and one or more processors operable to execute instructions, stored in the memory, to implement one or more modules or engines that, alone or collectively, perform a method such as one or more of the methods described herein.

It should be appreciated that all combinations of the foregoing concepts and additional concepts described in greater detail herein are contemplated as being part of the subject matter disclosed herein. For example, all combinations of claimed subject matter appearing herein is contemplated as being part of the subject matter disclosed herein.

### BRIEF DESCRIPTION OF THE DRAWINGS

FIG. 1 illustrates an example environment in which implementations disclosed herein can be implemented.
FIG. 2 is a flowchart illustrating an example method according to various implementations disclosed herein.
FIG. 3 is a flowchart illustrating another example method according to various implementations disclosed herein.
FIG. 4 depicts an example robot, in accordance with various implementations.
FIG. 5 schematically depicts an example architecture of a computer system

### DETAILED DESCRIPTION

Prior to turning to the figures, various implementations are described with reference to a visuomotor policy model, such as a robotic policy model. However, as described herein, those and other implementations can be utilized in conjunction with other models, such as other policy models, other neural network models that are not policy models, etc.

Visuomotor policies trained via imitation learning can perform challenging manipulation tasks but are often brittle to variations in lighting, visual distractors, and object locations. These vulnerabilities depend unpredictably on the training environments and are difficult to identify without time-consuming and expensive hardware evaluations. Implementations disclosed herein propose predictive red teaming: discovering policy vulnerabilities with respect to environmental factors and predicting performance degradation without additional hardware evaluations. Some of those implementations utilize RoboART, an automated red teaming (ART) pipeline. RoboART modifies nominal observations using generative image editing tools to vary factors of interest (e.g., lighting, distractors, object locations). Success rates under each variation are predicted using a conformal prediction-based anomaly detector applied to the edited observations. The approach is empirically evaluated for a visuomotor diffusion policy trained on grasping tasks, conducting hundreds (e.g., 200+) experiments in ten off-nominal conditions. RoboART accurately predicts policy performance in these settings. The utility of predictive red teaming is also demonstrated for targeted data collection. A mathematical model is used to predict performance degradation based on the anomaly rate, where the anomaly rate is the proportion of edited observations flagged as anomalous by the conformal prediction-based anomaly detector. The mathematical model is a linear function that subtracts the difference between the anomaly rate for a given environmental factor and the anomaly rate for nominal scenarios from the nominal expected reward.

It is possible to expose the vulnerabilities of a given robot policy with respect to changes in environmental factors such as lighting, visual distractors, and object placement without performing hardware evaluations in these scenarios. As robots are deployed in increasingly complex environments, scalable methods for predicting generalization to unseen scenarios become imperative. Hardware evaluations to discover vulnerabilities, which can depend surprisingly on policy training and architecture specifics, are often prohibitively expensive, especially when testing the limits of safe deployment across diverse scenarios.

For example, consider a visuomotor diffusion policy trained to perform pick-and-place tasks via behavior cloning. For instance, policy's training data can include 3,000 or more demonstrations, with substantial diversity in visual distractors and object placements. However, most training scenarios feature a pink mat. Would replacing the pink mat with a red mat degrade performance less than replacing it with a blue mat (a plausible prediction)? What would be the absolute degradation in success rates for each case? This prediction is incorrect: the success rate degrades from approximately 75% under nominal conditions to 15% for a red background and 35% for a blue background. Predicting the impact of other environmental factors (e.g., table height or introduction of a specific distractor object) can be even more challenging.

Some implementations of predictive red teaming discover policy vulnerabilities regarding environmental factors and predict performance degradation without additional hardware evaluations. Some of those implementations utilize RoboART, an automated red teaming (ART) pipeline. RoboART modifies nominal RGB observations using generative image editing tools to vary factors of interest (e.g., lighting, distractors, object locations). Success rates under each variation are predicted using a conformal prediction-based anomaly detector on the edited observations. The approach is empirically evaluated for a visuomotor diffusion policy trained on grasping tasks, using multiple (e.g., 200+) experiments in ten off-nominal conditions. RoboART accurately predicts policy performance in these settings. The utility of predictive red teaming is also demonstrated for targeted data collection. A mathematical model can be used to predict performance degradation based on the anomaly rate-the proportion of edited observations flagged as anomalous by the conformal prediction-based anomaly detector. For example, the model can a linear function subtracting the difference between the anomaly rate for a given environmental factor and the anomaly rate for nominal scenarios from the nominal expected reward. The policy can be, for example, a hybrid architecture incorporating both waypoint and trajectory action modes, leveraging pre-trained ViT encoders for image processing. The anomaly score is computed as the mean of the k-nearest neighbor cosine distances in the policy's embedding space. The system can use Imagen 3 and/or other image editing tools or models for image editing and Gemini Pro 1.5 or other multi-modal generative model as a vision-language model (VLM) critic for edits. A set of multiple (e.g., 100s of) edited observations can generated for each environmental factor. The anomaly rate can be computed as the proportion of observations flagged as anomalous using a threshold determined by conformal prediction. The predicted success rate can be calculated as 1 minus the anomaly rate. The system accurately identifies environmental factors significantly impacting performance and accurately predicts this impact. It also enables policy improvement via targeted data collection in conditions predicted to degrade performance.

Various implementations seek to expose vulnerabilities in a given policy concerning environmental factors (lighting, visual distractors, object locations) and predict their performance impact without hardware evaluations in off-nominal scenarios. Nominal scenarios can be defined as partially observable Markov decision processes (POMDPs) initialized in specific states. A distribution, Dnom, over scenarios captures nominal variations in environmental factors and tasks (via the reward function). Knowledge of Dnom is not assumed, only a dataset, Snom, of observations from nominal scenarios (ξ ~ Dnom).

A deterministic or stochastic policy (π), mapping observations (ot ∈ O) to actions (at ∈ A), can be provided to the red team, along with the nominal observation dataset (Snom). The focus can be on visuomotor policies trained via imitation learning. Snom includes observations from the policy's training dataset. A held-out set of nominal observations (Sval) is also available. Only nominal observations (Snom U Sval) are needed. The red team can query π on arbitrary observations, potentially with white-box access to internal policy representations.

The goal is to expose vulnerabilities of policy π concerning environmental factors (f ∈ F) selected by the red team. These factors can be arbitrarily fine-grained (e.g., specific distractor types, background colors). Vf represents a distribution of scenarios where factor f is altered relative to the nominal distribution (Vnom). Rπnom is the expected reward of π in scenarios (ξ ~ Vnom), and Rπf is the expected reward for Vf. Rewards are assumed to be bounded in [0, 1]. Given Rπnom, the goal is to predict Rπf for all Vf ∈ F.

RoboART is utilized for predictive red teaming using generative image editing and anomaly detection, such as anomaly detection in visuomotor policies that rely primarily on RGB image observations. The approach can include two main steps. First, generative image editing tools modify the nominal observations in Sval (Section III) to reflect various factors of interest (e.g., background, lighting, distractor objects). For each factor, the performance degradation of the policy is then predicted using anomaly detection. These steps are described in more detail below.

A set F of environmental factors with the potential to degrade the performance of the given policy π is selected. This set may be arbitrarily fine-grained (e.g., specific lighting conditions, distractor objects, background colors). The factors of interest will depend on the policy's deployment needs and plausible environmental changes the robot may encounter.

For each factor f ∈ F, observations in the nominal set Sval are modified to reflect a change in f. State-of-the-art generative image editing tools, capable of using detailed language instructions to produce realistic and globally consistent edits, can be leveraged. For example, the Imagen 3 diffusion model can be utilized. For instance, an edit adding a novel object to the scene can be performed. For robots with multiple cameras (e.g., a wrist camera and an overhead camera), each observation is edited independently with the same prompt. The image editing model renders the desired object realistically, maintaining per-view global consistency in lighting, shadows, and overall scene composition.

In addition to adding novel objects, state-of-the-art image editing models can be used to generate edits corresponding to various visual scene changes with high realism and precision (e.g., changing background color, adding a human, changing lighting conditions).

Diffusion-based image editing models can be used to generate multiple variations of edited images from the same input image and prompt. These variations often differ in quality and adherence to the prompt. To ensure edited observations accurately reflect the desired change in environmental factor f, a batch of multiple (e.g., four) edited images per input is generated, and a vision-language model (VLM) is used as a critic. The VLM is prompted with the original and edited images, and asked to judge if any accurately reflect the desired change; if so, the VLM selects the best one (otherwise, the observation is discarded).

After the image editing process, a set Sf of edited observations corresponding to each environmental factor f ∈ F is obtained. A component of RoboART uses Sf to predict the performance degradation induced by each factor f. The approach utilizes techniques from anomaly detection: for each observation in Sf, a quantification of how "close" it is to nominal observations in Snom from the perspective of the policy π is performed. If this distance exceeds a threshold computed using conformal prediction, the observation is flagged as an anomaly. The anomaly rate for each factor f is hypothesized to predict the performance degradation under that factor. This relationship is approximated by a linear function where the predicted reward under a varied factor (Rπf) is approximately equal to the nominal expected reward (Rπnom) minus the difference between the anomaly rate for the varied factor (αf) and the anomaly rate for nominal scenarios (αnom). αnom is chosen as 1-Rπnom, assuming the nominal performance of the policy has been measured.

The anomaly rate αf for each factor f is computed using the edited observations Sf. Policy embedding distances are utilized to quantify how far from nominal a given observation is. This choice is motivated by the prior success of such methods in anomaly detection and the simplicity of implementation.

A latent representation φπ(o), produced by the policy π for a given observation o, can be used. For policies directly parameterized using a neural network, a common choice is to use the output of an intermediate layer of the network. In experiments in Section V, policies parameterized using diffusion models can be utilized. In this setting, the context vector provided to the denoising process is utilized as the latent representation. A policy-dependent anomaly score function sπ(o, Snom) can quantify how far from nominal the observation o is. A simple approach is to define sπ as the nearest-neighbor cosine distance between the embedding φπ(o) and the embeddings computed for the nominal observations in Snom. A more general variant, used in some experiments referenced herein, computes the mean of the k-nearest neighbor cosine distances. This anomaly score quantifies how dissimilar a given observation is compared to similar training observations from the perspective of the policy.

For each factor f ∈ F, the anomaly score for all edited observations o ∈ Sf is computed. The anomaly rate for a factor f is defined as the proportion of observations flagged as anomalous according to a threshold τ.

Conformal prediction can be used to compute the anomaly threshold τ to bound the probability that a nominal observation is flagged as anomalous to a desired threshold αnom. Denoting the cardinality of the set Sval as nval, α is chosen such that it satisfies a relationship involving the inverse of the beta distribution function and αnom, where v is the floor of (nval + 1)α. τ is then computed as the ceiling of (nval + 1)(1 - α)/nval empirical quantile of the set {sπ(o, Snom)| o ∈ Sval}. This choice of τ can ensure that, with probability 1 - δ over the sampling of the validation set Sval, the probability that new observations drawn from the nominal distribution Dnom are flagged as anomalous is bounded by αnom.

Some implementations of RoboART are summarized by the following algorithm.

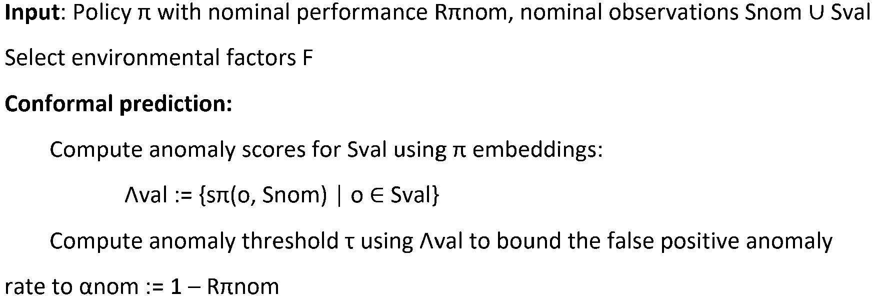

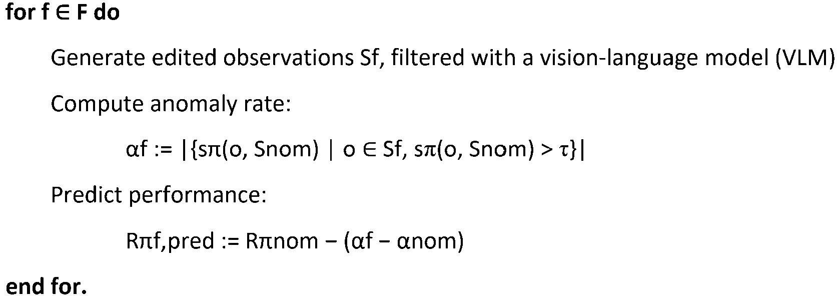

Some implementations disclosed herein present a method for predicting performance degradation of visuomotor policies under varied environmental factors is disclosed, obviating the need for extensive and costly hardware evaluations. Various implementations utilize techniques, sometimes termed Robotics Auto Red Teaming (RoboART), that include an automated red teaming pipeline that combines generative image editing and anomaly detection. RoboART modifies nominal observations using tools such as Imagen 3, incorporating edits based on language prompts (e.g., "change the background color to red") to simulate changes in lighting, distractors, and object locations. A vision-language model, such as Gemini Pro 1.5, critically evaluates the generated edits to ensure they accurately reflect the intended environmental change. The edited observations are then processed by an anomaly detection system which computes the distance of each edited observation to a set of nominal observations. Conformal prediction establishes a threshold for identifying anomalous observations. The proportion of anomalous edited observations for a given environmental factor is used to predict the corresponding performance degradation. The system demonstrates the utility of predictive red teaming for targeted data collection, using these predictions to guide the collection of additional training data in scenarios predicted to cause significant performance degradation. This additional data is then used to co-finetune the policy, improving its performance in the previously identified vulnerable conditions. The policy used in the experiments is a hybrid architecture incorporating waypoint and trajectory action modes, leveraging pre-trained ViT encoders for image processing. The anomaly score is calculated as the mean of the k-nearest neighbor cosine distances in the policy's embedding space.

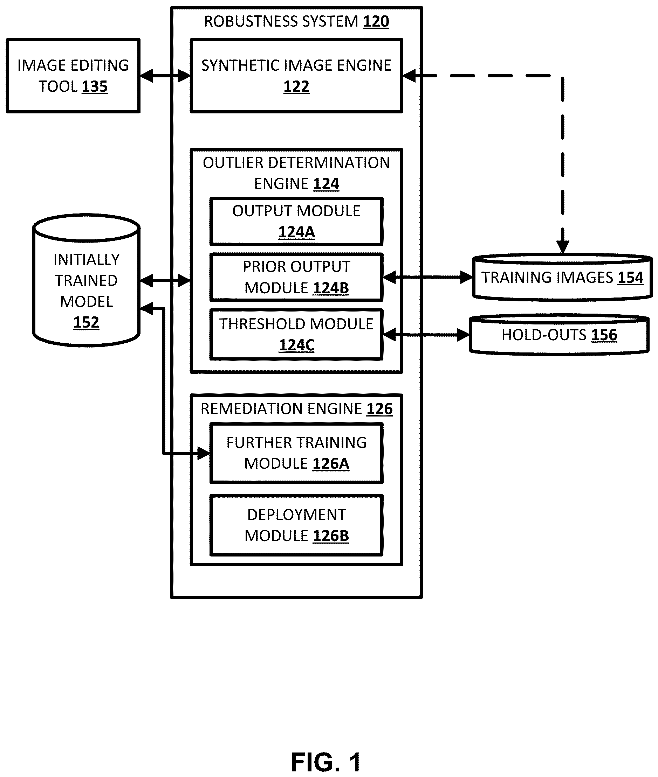

FIG. 1 illustrates an example environment in which implementations disclosed herein can be implemented. The example environment of FIG. 1 includes a robustness system 120 that can interact with (or include in some implementations) an image editing tool 135, an initially trained model 152, training image(s) 154, hold-outs 156, and/or other component(s). The initially trained model 152 can be a neural network model and/or other type of model. For example, if the initially trained model 152 is a neural network model, then the model can be a diffusion model, a transformer model, a generative model, a convolutional neural network model, or other type of model.

The robustness system 120 of FIG. 1 is illustrated as including a synthetic image engine 122, an outlier determination engine 124, and a remediation engine 126.

The synthetic image engine 122 can interact with the image editing tool 135 to cause generation of synthetic image(s) described herein. For example, to generate a synthetic image that includes variation(s) to a training image, the synthetic image engine 122 can provide, to the image editing tool 135, a natural language prompt and the training image. The natural language prompt can describe the variation(s) to be included in the synthetic image. The image editing tool 135 can generate the synthetic image based on the natural language prompt and the training image and the synthetic image engine 122 can receive the synthetic image in response. As another example, to generate a synthetic image that includes particular feature(s) but that is not based on a training image, the synthetic image engine 122 can generate a natural language prompt and provide the natural language prompt to the image editing tool 135. The natural language prompt can describe the particular feature(s) to be included in the synthetic image. The image editing tool 135 can generate the synthetic image based on the natural language prompt and provide the synthetic image to the synthetic image engine 122 in response.

The outlier determination engine 124 can interact with the synthetic image engine 122 to process a synthetic image to determine whether the synthetic image is an outlier of the initially trained model 152. The outlier determination engine 124 can include an output module 124A that process the synthetic image, using the initially trained model 152, to generate output. For example, the output can be an embedding generated as intermediate output of an intermediate layer of the initially trained model 152 during the processing of the synthetic image, where the intermediate layer is a non-terminal layer of the initially trained model 152.

The prior output module 124B can generate one or more prior embeddings from one or more corresponding training images from the training image(s) 154. Each prior embedding can be generated using the initially trained model 152 in response to processing of a corresponding training image.

The threshold module 124C can generate a threshold that is utilized, by the outlier determination engine 124, in determining whether a synthetic image is an outlier. For example, the threshold module 124C can process, using the initially trained model 152, hold-out training image(s) 156 to generate corresponding embedding(s) and utilize those embedding(s) to generate the threshold. For instance, the threshold can be generated as the mean (or other measure) of the distance between the prior embedding(s) and corresponding embedding(s) generated by the initially trained model 152 in response to processing of hold-out training image(s) 156.

The remediation engine 126 can interact with the outlier determination engine 124 and can perform remediating action(s) in response to a determination by the outlier determination engine 124 that a synthetic image is an outlier. The remediation engine 126 can include a further training module 126A and/or a deployment module 126B.

The further training module 126A can perform further training of the initially trained model 152 using a synthetic image that is determined to be an outlier by the outlier determination engine 124 and/or using other synthetic image(s) that are generated to include the same variation(s), and/or other feature(s), as the synthetic image that is determined to be an outlier by the outlier determination engine 124.

The deployment module 126B can control, based on determinations by the outlier determination engine 124, deployment of the initially trained model 152. For example, if synthetic image(s) that include a particular feature are determined to be outliers, then the deployment module 126B can prevent deployment of the initially trained model 152 in conditions in which the particular feature is present and/or likely to be present. As another example, if synthetic image(s) that include a particular feature are determined to not be outliers, then the deployment module 126B can enable deployment of the initially trained model 152 in conditions in which the particular feature is present and/or likely to be present.

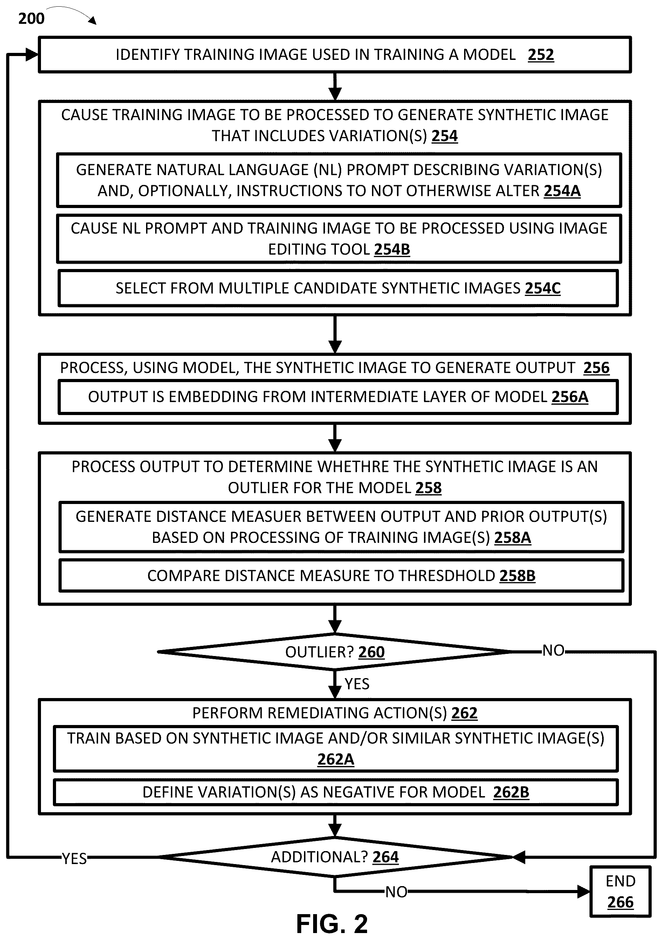

FIG. 2 is a flowchart illustrating an example method 200 according to various implementations disclosed herein. For convenience, the operations of the method of FIG. 2 (or any other method disclosed herein) are described as being performed by a system, such as robustness system 120 (see FIG. 1). This system can include one or more processors and/or other component(s) of a server or other computing device. Moreover, while operations of the method of FIG. 2 are shown in a particular order, this is not meant to be limiting. One or more operations may be reordered, omitted or added.

At block 252, the system identifies a training image that was used in training of a model. For example, the model can be a policy model, a vision-language model, a neural network model, an image generation model, a multi-modal generation and/or output model, and/or other type of model. The training image can be all or part of an instance of training input utilized in training the model. For example, the instance of training input can include only the training image, or could include the training image and other input data such as natural language, current agent state (e.g., a current state of robot component(s)), and/or other input data. The instance of training input can, e.g., in supervised or semi-supervised training, be paired with an instance of training output that reflects a supervised or semi-supervised label. The training image can be a real non-synthetic image captured by a physical real-world camera or can be a synthetic image, such as one generated from a simulated environment (e.g., a simulated environment via which an imitation learning episode is performed).

At block 254, the system causes the training image to be processed to generate a synthetic image that includes one or more variations. Block 254 can optionally include sub-blocks 254A, 254B, and/or 254C. At sub-block 254A, the system generates a natural language prompt that describes the one or more variations of the training image and, optionally, instructions to not otherwise alter the training image. As a particular example, the natural language prompt can include natural language of the form "add a person in the background of the image but keep all other aspects of the image the same".

At sub-block 254B, the system causes the natural language prompt and the training image to be processed using an image editing tool, such as a generative image editing tool. In some implementations, this can involve providing the natural language prompt and the training image to the image editing tool via an application programming interface (API) of the image editing tool. In some implementations, the system can include the image editing tool and sub-block 254B can include processing the natural language prompt and the training image using the image editing tool. The synthetic image can be received, from the image editing tool, responsive to the system causing the natural language prompt and the training image to be processed by the image editing tool.

At sub-block 254C, the system selects the synthetic image from multiple candidate synthetic images, such as from multiple candidate synthetic images generated by the image editing tool responsive to the system causing the natural language prompt and the training image to be processed by the image editing tool at sub-block 254B. For example, the image editing tool can generate two, four, or other quantity of candidate synthetic images and the system selects one of those candidate synthetic images as the synthetic image at sub-block 254C. In some implementations, the system selects the synthetic image, from the multiple candidate synthetic images, based on causing the multiple candidate synthetic images to be processed, using a vision-language model, along with the training image and a vision-language model prompt that requests selection of one of the multiple candidate synthetic images. For example, the vision-language model prompt can be of the form ""choose, from among the provided candidate synthetic images, the one that most accurately represents the training image" or can be of the form "choose, from among the provided candidate synthetic images, the one that most accurately represents the training image while also including the desired alteration described by [natural language prompt]", where [natural language prompt] can be the same as the natural language prompt provided to the image editing tool at sub-block 254A.

At block 256, the system processes, using the model, the synthetic image to generate output. In some implementations, as reflected by sub-block 256A, the output is an embedding that is generated as intermediate output of an intermediate layer (e.g. a non-terminal neural network layer) of the model. In some of those implementations, the intermediate layer is a diffusion model layer, and the embedding is a context vector provided to a denoising process.

At block 258, the system processes the output, generated at block 256, to determine whether the synthetic image is an outlier for the model. Block 258 can optionally include sub-blocks 258A and 258B. At sub-block 258A, the system generates a distance measure between the output (e.g., embedding) generated at block 256 and one or more prior outputs (e.g., one or more prior embeddings) generated (e.g., as prior intermediate output) based on processing of training image(s) using the model (after it has been trained based on such training image(s)). As sub-block 258B, the system compares the distance measure to a threshold. For example, the system can compare the distance measure to a threshold and determine that the synthetic image is an outlier for the model if the distance measure exceeds the threshold. In some implementations, the threshold is determined based on one or more additional prior outputs (e.g., one or more additional prior embeddings) generated (e.g., as additional prior intermediate output) based on processing of other image(s) that are in addition to the training image(s). For example, the other image(s) can include held-out images that were part of training data, but on which the model was not initially trained.

At block 260, if the system determines, based on the processing of block 258, that the synthetic image is not an outlier for the model, the system proceeds to block 264 and bypasses causing, at block 262, one or more (e.g., any) remediating action(s) to be performed. At block 260, if the system determines, based on the processing of block 258, that the synthetic image is an outlier for the model, the system proceeds to block 262 and performs one or more remediation actions.

Block 262 can optionally include sub-blocks 262A and/or 262B. At sub-block 262A, the one or more remediation action(s) include further training the model based on the synthetic image and/or similar synthetic image(s). The similar synthetic image(s) can be based on the same variation(s) as included in the synthetic image. For example, the similar synthetic image(s) can be generated by causing an additional training image to be processed, utilizing the image editing tool, along with the same natural language prompt as was utilized at the iteration of sub-block 254A in generating the synthetic image. Put another way, the additional synthetic image(s) can be generated based on additional training images but utilizing the same, or similar, natural language prompt and/or other editing instructions that were utilized by the image editing tool to generate the synthetic image.

At sub-block 262B, the one or more remediation action(s) include defining the variation(s), included in the synthetic image, as negative for the model. For example, if the variation was to add a red mat, red mats can be defined, in one or more data structures, as a negative feature for the model (e.g., one for which it is not robust). Having the variation defined as a negative for the model can lessen the chance, or eliminate the chance, that the model is utilized in a deployment environment in which the feature is present. In some versions of sub-block 262B, the defining of the variation(s), included in the synthetic image, as negative for the model can optionally only occur once a threshold quantify of, or percentage of (e.g., 60%, 70%, 80%, or other percentage), synthetic images having the variation(s) are determined to be outliers for the model. For example, a red mat may only be considered a negative feature for the model if at least twenty synthetic images having that variation are processed for outlier determination and at least eighty percent of those twenty synthetic images are determined to be outliers.

At block 264, the system determines whether additional training image(s) are to be identified and/or if additional variations are to be utilized and if so, the system proceeds to block 252 and performs another iteration of method 200 using an alternative training image and/or using an alternative variation. If not, the system proceeds to block 266 and ends method 200. In some implementations, the system can make the determination of block 264 based on whether additional unprocessed training image(s) remain, whether a threshold quantity of iterations of method 200 have been performed, based on whether additional desired variation(s) (e.g., defined by human(s) or separate system(s)) remain for which synthetic image(s) are to be generated, and/or based on one or more additional or alternative criteria.

Through multiple iterations of method 200, a large quantity of synthetic image(s) can be generated and processed for outlier determination - and remediating action(s) can be performed based on the synthetic image(s) determined to be outliers. Through such multiple iterations, and application of the remediating action(s), the robustness of the model can be improved.

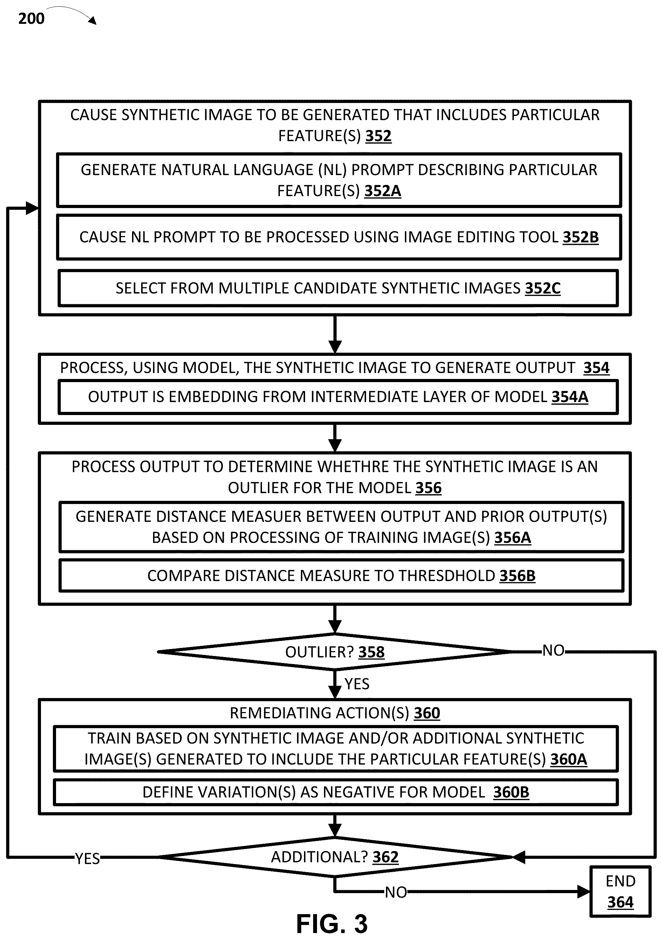

FIG. 3 is a flowchart illustrating another example method 300 according to various implementations disclosed herein. For convenience, the operations of the method of FIG. 3 (or any other method disclosed herein) are described as being performed by a system, such as robustness system 120 (see FIG. 1). This system can include one or more processors and/or other component(s) of a server or other computing device. Moreover, while operations of the method of FIG. 3 are shown in a particular order, this is not meant to be limiting. One or more operations may be reordered, omitted or added.

At block 352, the system causes a synthetic image to be generated that includes one or more particular features. Block 352 can optionally include sub-blocks 352A, 352B, and/or 352C.

At sub-block 352A, the system generates a natural language prompt that describes the one or more particular features. For example, if the particular feature(s) are a red mat, the natural language prompt can be of the form "generate an image of a living room with a red mat". As another example, if the particular feature(s) are high glare lighting conditions, the natural language prompt can be of the form "generate an image of the interior of a room with high glare lighting". As yet another example, if the particular feature(s) are presence of birds in store, the natural language prompt can be of the form "generate an image of a store interior with presence of birds".

At sub-block 352B, the system causes the natural language prompt to be processed by an image editing tool, such as a generative image generation tool. In some implementations, this can involve providing the natural language prompt to the image editing tool via an application programming interface (API) of the image editing tool. In some of those implementations, the natural language prompt can be provided to the image editing tool without providing any training image to the image editing tool or without providing any other image to the image editing tool. Put another way, in some of those implementations, the generation and output of the synthetic image is based on only the natural language prompt and not on any training image or other base image.

At sub-block 352C, the system selects the synthetic image from multiple candidate synthetic images that are received from the image generation tool responsive to the system causing the natural language prompt to be processed by the image generation tool at sub-block 352B. For example, the system can select the synthetic image, from the multiple candidate synthetic images, based on causing the multiple candidate synthetic images to be processed, using a vision-language model, along with a vision-language model prompt that requests selection of one of the multiple candidate synthetic images. For example, the vision-language model prompt can be of the form "choose, from among the provided candidate synthetic images, the one that most accurately represents the one or more particular features described by [natural language prompt]", where [natural language prompt] can be the same as the natural language prompt provided to the image editing tool at sub-block 352A.

At block 354, the system processes the synthetic image, using a model, to generate output. In some implementations, as reflected by sub-block 354A, the output is an embedding that is generated as intermediate output of an intermediate layer (e.g. a non-terminal neural network layer) of the model. In some of those implementations, the intermediate layer is a diffusion model layer, and the embedding is a context vector provided to a denoising process.

At block 356, the system processes the output, generated at block 354, to determine whether the synthetic image is an outlier for the model. Block 356 can optionally include sub-blocks 356A and/or 356B. At sub-block 356A, the system generates a distance measure between the output (e.g., embedding) generated at block 354 and one or more prior outputs (e.g., one or more prior embeddings) generated (e.g., as prior intermediate output) based on processing of one or more training images used in the initial training of the model.

At sub-block 356B, the system compares the distance measure to a threshold. For example, the system can compare the distance measure to a threshold and determine that the synthetic image is an outlier for the model if the distance measure exceeds the threshold. In some implementations, the threshold is determined based on one or more additional prior outputs (e.g., one or more additional prior embeddings) generated (e.g., as additional prior intermediate output) based on processing of other image(s) that are in addition to the training image(s) used in the initial training of the model. For example, the other image(s) can include held-out images that were part of training data, but on which the model was not initially trained.

At block 358, if the system determines, based on the processing of block 356, that the synthetic image is not an outlier for the model, the system proceeds to block 362 and bypasses causing, at block 360, one or more (e.g., any) remediating action(s) to be performed. At block 358, if the system determines, based on the processing of block 356, that the synthetic image is an outlier for the model, the system proceeds to block 360 and performs one or more remediation actions.

Block 360 can optionally include sub-blocks 360A and/or 360B. At sub-block 360A, the one or more remediation action(s) include further training the model based on the synthetic image and/or additional synthetic image(s) generated to include the particular features. For example, the additional synthetic image(s) can be generated by causing additional natural language prompt(s) to be processed by the image editing tool, where the additional natural language prompt(s) describe the same one or more particular features as were described by the natural language prompt utilized to generate the synthetic image. For instance, if the natural language prompt utilized to generate the synthetic image was of the form "generate an image of a living room with a red mat", the additional natural language prompt(s) can include another instance of the form "generate an image of a living room with a red mat", a further natural language prompt of the form "generate an image of a dining room with a red mat", etc.362.

At sub-block 360B, the one or more remediation action(s) include defining the particular feature(s), that were included in the synthetic image, as negative(s) for the model. For example, if the particular feature(s) are a red mat, red mats can be defined, in one or more data structures, as negative feature(s) for the model (e.g., one for which it is not robust). Having the particular feature(s) defined as negative(s) for the model can lessen the chance, or eliminate the chance, that the model is utilized in a deployment environment in which the feature(s) are present.

At block 362, the system determines whether additional synthetic image(s) are to be generated to include the one or more particular features or to include alternative particular feature(s). If so, the system proceeds to block 352 and repeats method 300 to generate and process another synthetic image. If not, the system proceeds to block 364 and ends method 300. In some implementations, the system can determine whether additional synthetic image(s) are to be generated based on whether a threshold quantity of iterations of method 300 have been performed, based on whether additional desired particular feature(s) (e.g., defined by human(s) or separate system(s)) remain for which synthetic image(s) are to be generated, and/or based on one or more additional or alternative criteria.

Through multiple iterations of method 300, a large quantity of synthetic image(s) can be generated and processed for outlier determination - and remediating action(s) can be performed based on the synthetic image(s) determined to be outliers. Through such multiple iterations, and application of the remediating action(s), the robustness of the model can be improved.

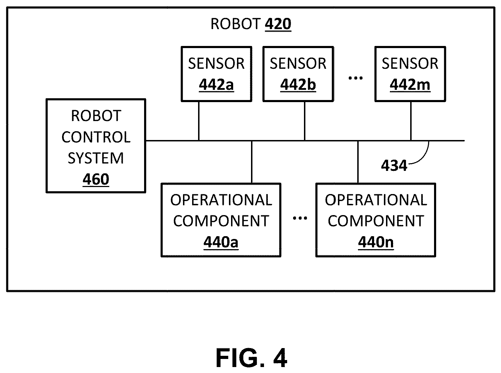

FIG. 4 schematically depicts an example architecture of a robot 420, which can optionally be utilized in some implementations such as those that include a robotic policy model. The robot 420 includes a robot control system 460, one or more operational components 440a-440n, and one or more sensors 442a-442m. The sensors 442a-442m may include, for example, vision sensors, light sensors, pressure sensors, pressure wave sensors (e.g., microphones), proximity sensors, accelerometers, gyroscopes, thermometers, barometers, and so forth. While sensors 442a-m are depicted as being integral with robot 420, this is not meant to be limiting. In some implementations, sensors 442a-m may be located external to robot 420, e.g., as standalone units.

Operational components 440a-440n may include, for example, one or more end effectors and/or one or more servo motors or other actuators to effectuate movement of one or more components of the robot. For example, the robot 420 may have multiple degrees of freedom and each of the actuators may control the actuation of the robot 420 within one or more of the degrees of freedom responsive to the control commands. As used herein, the term actuator encompasses a mechanical or electrical device that creates motion (e.g., a motor), in addition to any driver(s) that may be associated with the actuator and that translate received control commands into one or more signals for driving the actuator. Accordingly, providing a control command to an actuator may comprise providing the control command to a driver that translates the control command into appropriate signals for driving an electrical or mechanical device to create desired motion.

The robot control system 460 may be implemented in one or more processors, such as a CPU, GPU, and/or other controller(s) of the robot 420. In some implementations, the robot 420 may comprise a "brain box" that may include all or aspects of the control system 460. For example, the brain box may provide real time bursts of data to the operational components 440a-n, with each of the real time bursts comprising a set of one or more control commands that dictate, inter alia, the parameters of motion (if any) for each of one or more of the operational components 440a-n. In some implementations, the robot control system 460 may perform one or more aspects of method(s) described herein, such as method 200 of FIG. 2.

Although control system 460 is illustrated in FIG. 4 as an integral part of the robot 420, in some implementations, all or aspects of the control system 460 may be implemented in a component that is separate from, but in communication with, robot 420. For example, all or aspects of control system 460 may be implemented on one or more computing devices that are in wired and/or wireless communication with the robot 420, such as computing device 510.

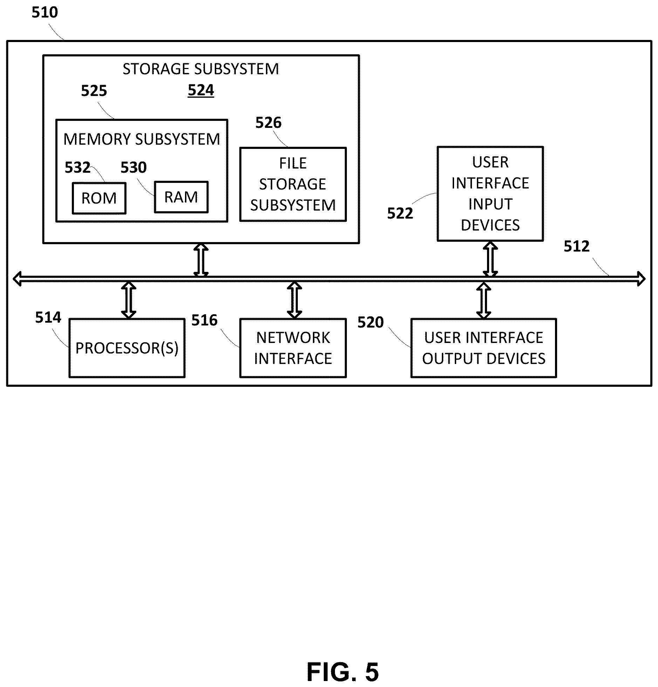

FIG. 5 is a block diagram of an example computer system 510. Computer system 510 typically includes at least one processor 514 which communicates with a number of peripheral devices via bus subsystem 512. These peripheral devices may include a storage subsystem 524, including, for example, a memory subsystem 525 and a file storage subsystem 526, user interface output devices 520, user interface input devices 522, and a network interface subsystem 516. The input and output devices allow user interaction with computer system 510. Network interface subsystem 516 provides an interface to outside networks and is coupled to corresponding interface devices in other computer systems.

User interface input devices 522 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computer system 510 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 510 to the user or to another machine or computer system.

Storage subsystem 524 stores programming and data constructs that provide the functionality of some or all of the modules described herein. For example, the storage subsystem 524 may include the logic to perform selected aspects of method 200, method 300, and/or to implement one or more aspects of robustness system 120 and/or robot 400. Memory 525 used in the storage subsystem 524 can include a number of memories including a main random-access memory (RAM) 530 for storage of instructions and data during program execution and a read only memory (ROM) 532 in which fixed instructions are stored. A file storage subsystem 526 can provide persistent storage for program and data files, and may include a hard disk drive, a CD-ROM drive, an optical drive, or removable media cartridges. Modules implementing the functionality of certain implementations may be stored by file storage subsystem 526 in the storage subsystem 524, or in other machines accessible by the processor(s) 514.

Bus subsystem 512 provides a mechanism for letting the various components and subsystems of computer system 510 communicate with each other as intended. Although bus subsystem 512 is shown schematically as a single bus, alternative implementations of the bus subsystem may use multiple buses.

Computer system 510 can be of varying types including a workstation, server, computing cluster, blade server, server farm, smart phone, smart watch, smart glasses, set top box, tablet computer, laptop, or any other data processing system or computing device. Due to the ever-changing nature of computers and networks, the description of computer system 510 depicted in FIG. 5 is intended only as a specific example for purposes of illustrating some implementations. Many other configurations of computer system 510 are possible having more or fewer components than the computer system depicted in FIG. 5.

In some implementations, a method implemented by processor(s) is provided and includes causing a training image to be processed to generate a synthetic image including one or more variations to the training image. The training image is one based on which a model has been trained. The method includes processing, using the model, the synthetic image to generate output. The method includes processing the output to determine whether the synthetic image is an outlier for the model. The method includes, in response to determining that the synthetic image is an outlier for the model, further training the model based on the synthetic image.

In some implementations, the method can further include, in response to determining that the synthetic image is not an outlier for the model, bypassing any further training of the model based on the synthetic image.

In some implementations, the output can be an embedding generated as intermediate output of an intermediate layer of the model, the intermediate layer being a non-terminal neural network layer of the model. In some of those implementations, processing the output to determine whether the synthetic image is an outlier for the model can include generating a distance measure between the embedding and one or more prior embeddings generated, as prior intermediate output, of the intermediate layer, based on processing of one or more training images. In some versions of those implementations, processing the output to determine whether the synthetic image is an outlier for the model can further include comparing the distance measure to a threshold; and determining that the synthetic image is an outlier in response to determining that the distance measure satisfies the threshold. In some versions of those implementations, the threshold can be determined based on one or more additional prior embeddings generated, as additional prior intermediate output, of the intermediate layer, based on processing of one or more non-synthetic images that are in addition to the one or more training images.

In some implementations, the model can be a diffusion model and the embedding can be a context vector provided to a denoising process.

In some implementations, causing the training image to be processed to generate the synthetic image can include generating a natural language prompt that describes an alteration to the training image and that optionally includes instructions to not alter other aspects of the training image; causing the natural language prompt and the training image to be processed by a generative image editing tool; and receiving the synthetic image from the generative image editing tool responsive to causing the natural language prompt and the training image to be processed by the generative image editing tool. In some of those implementations, multiple candidate synthetic images can be received from the generative image editing tool responsive to causing the natural language prompt and the training image to be processed by the generative image editing tool, and the method can further include selecting the synthetic image from the multiple candidate synthetic images. In some versions of those implementations, selecting the synthetic image from the multiple candidate synthetic images can include generating an additional natural language prompt that requests selection of a synthetic image, if any, from the multiple candidate synthetic images, that most accurately represents the training image with the alteration described by the natural language prompt; causing the additional natural language prompt, the multiple candidate synthetic images, and the training image to be processed by a vision-language model; and selecting the synthetic image based on output generated by the vision-language model responsive to causing the additional natural language prompt, the multiple candidate synthetic images, and the training image to be processed by the vision-language model.

In some implementations, further training the model based on the synthetic image can include determining a supervision signal utilized in training the model based on the training image; and further training the policy model based on the synthetic image and the determined supervision signal, the determined supervision signal being utilized based on being utilized for training the model based on the training image and the synthetic image being the variant of the training image. In some of those implementations, the supervision signal can be based on an imitation learning episode.

In some implementations, the training image can be one of multiple episode training images from an episode based on which the model has been trained. In some of those implementations, the method can further include, in response to determining that the synthetic image is an outlier for the model, causing additional of the episode training images to be processed to generate additional synthetic images that include the one or more variations; and further training the model based on the additional synthetic images. In some versions of those implementations, further training the model based on the additional synthetic images can include training the model based on a synthetic episode that includes the synthetic image and the additional synthetic images.

In some implementations, the method can further include, in response to determining that the synthetic image is an outlier for the model, causing additional of the training images to be processed to generate additional synthetic images that include the one or more variations; and further training the model based on the additional synthetic images. In some implementations, the model can be a robotic policy model trained for use in generating final output, of the policy model, that is used to control a robotic device.

In some implementations, the model can be a non-robotic policy model. In some of those implementations, the non-robotic policy model can be trained for use in generating final output that is used to control a computer application.

In some implementations, the model can be a neural network model. In some of those implementations, the neural network model can be a generative model. In some of those implementations, the generative model can include one or more transformer layers.

In some implementations, the one or more variations can include a new object not present in the training image, a new lighting effect, a new background, and/or a different position of an object that is present in the training image.

In some implementations, a method implemented by processor(s) is provided and includes, subsequent to initial training of a model, causing a synthetic image to be generated that includes one or more particular features. The method includes processing, using the model, the synthetic image to generate output. The method includes processing the output to determine whether the synthetic image is an outlier for the model. The method includes, in response to determining that the synthetic image is an outlier for the model, causing additional synthetic images to be generated that include the one or more particular features. The method includes further training the model based on the additional synthetic images.

In some implementations, the method can further include further training the model based on the synthetic image. In some of those implementations, the method can further include, in response to determining that the synthetic image is not an outlier for the model, bypassing causing additional synthetic images to be generated that include the one or more particular features. In some versions of those implementations, causing the training image to be processed to generate the synthetic image can include generating a natural language prompt that describes the one or more particular features; causing the natural language prompt to be processed by an image generation tool; and receiving the synthetic image from the image generation model responsive to causing the natural language prompt to be processed by the image generation tool. In some versions of those implementations, multiple candidate synthetic images can be received from the image generation tool responsive to causing the natural language prompt to be processed by the image generation tool, and the method can further include selecting the synthetic image from the multiple candidate synthetic images. In some versions of those implementations, selecting the synthetic image from the multiple candidate synthetic images can include generating an additional natural language prompt that requests selection of a synthetic image, if any, from the multiple candidate synthetic images, that most accurately represents the one or more particular features described by the natural language prompt; causing the additional natural language prompt and the multiple candidate synthetic images to be processed by a vision-language model; and selecting the synthetic image based on output generated by the vision-language model responsive to causing the additional natural language prompt and the multiple candidate synthetic images to be processed by the vision-language model.

In some implementations, the output can be an embedding generated as intermediate output of an intermediate layer of the model, the intermediate layer being a non-terminal layer of the model. In some versions of those implementations, processing the output to determine whether the synthetic image is an outlier for the model can include generating a distance measure between the embedding and one or more prior embeddings generated, as prior intermediate output, of the intermediate layer, based on processing of one or more training images used in the initial training of the model. In some versions of those implementations, processing the output to determine whether the synthetic image is an outlier for the model can further include comparing the distance measure to a threshold; and determining that the synthetic image is an outlier in response to determining that the distance measure satisfies the threshold. In some versions of those implementations, the threshold can be determined based on one or more additional prior embeddings generated, as additional prior intermediate output, of the intermediate layer, based on processing of one or more non-synthetic images that are in addition to the one or more training images.

In addition, some implementations include one or more processors (*e.g.*, central processing unit(s) (CPU(s)), graphics processing unit(s) (GPU(s)), and/or tensor processing unit(s) (TPU(s)) of one or more computing devices, where the one or more processors are operable to execute instructions stored in associated memory, and where the instructions are configured to cause performance of any of the aforementioned methods. Some implementations also include one or more computer-readable storage media (e.g., transitory and/or non-transitory) storing computer instructions executable by one or more processors to perform any of the aforementioned methods. Some implementations also include a computer program product including instructions executable by one or more processors to perform any of the aforementioned methods.

## Claims

1. A method implemented by one or more processors, the method comprising:
causing a training image to be processed to generate a synthetic image that includes one or more variations to the training image, the training image being one based on which a model has been trained;
processing, using the model, the synthetic image to generate output;
processing the output to determine whether the synthetic image is an outlier for the model; and
in response to determining that the synthetic image is an outlier for the model:
further training the model based on the synthetic image.

2. The method of claim 1, further comprising:
in response to determining that the synthetic image is not an outlier for the model:
bypassing any further training of the model based on the synthetic image.

3. The method of claim 1 or claim 2, wherein the output is an embedding generated as intermediate output of an intermediate layer of the model, the intermediate layer being a non-terminal neural network layer of the model, optionally wherein the model is a diffusion model and wherein the embedding is a context vector provided to a denoising process.

4. The method of claim 3, wherein processing the output to determine whether the synthetic image is an outlier for the model comprises:
generating a distance measure between the embedding and one or more prior embeddings generated, as prior intermediate output, of the intermediate layer, based on processing of one or more training images.

5. The method of claim 4, wherein processing the output to determine whether the synthetic image is an outlier for the model further comprises:
comparing the distance measure to a threshold; and
determining that the synthetic image is an outlier in response to determining that the distance measure satisfies the threshold.

6. The method of claim 5, wherein the threshold is determined based on one or more additional prior embeddings generated, as additional prior intermediate output, of the intermediate layer, based on processing of one or more non-synthetic images that are in addition to the one or more training images.

7. The method of any one of the preceding claims, wherein causing the training image to be processed to generate the synthetic image comprises:
generating a natural language prompt that describes an alteration to the training image and that optionally includes instructions to not alter other aspects of the training image;
causing the natural language prompt and the training image to be processed by a generative image editing tool; and
receiving the synthetic image from the generative image editing tool responsive to causing the natural language prompt and the training image to be processed by the generative image editing tool.

8. The method of claim 7, wherein multiple candidate synthetic images are received from the generative image editing tool responsive to causing the natural language prompt and the training image to be processed by the generative image editing tool, and further comprising:
selecting the synthetic image from the multiple candidate synthetic images.

9. The method of claim 8, wherein selecting the synthetic image from the multiple candidate synthetic images comprises:
generating an additional natural language prompt that requests selection of a synthetic image, if any, from the multiple candidate synthetic images, that most accurately represents the training image with the alteration described by the natural language prompt;
causing the additional natural language prompt, the multiple candidate synthetic images, and the training image to be processed by a vision-language model; and
selecting the synthetic image based on output generated by the vision-language model responsive to causing the additional natural language prompt, the multiple candidate synthetic images, and the training image to be processed by the vision-language model.

10. The method of any one of the preceding claims, wherein further training the model based on the synthetic image comprises:
determining a supervision signal utilized in training the model based on the training image; and
further training the policy model based on the synthetic image and the determined supervision signal, wherein the determined supervision signal is utilized based on being utilized for training the model based on the training image and the synthetic image being the variant of the training image, optionally wherein the supervision signal is based on an imitation learning episode.

11. The method of any one of the preceding claims, wherein the training image is one of multiple episode training images from an episode based on which the model has been trained and the method further comprising:
in response to determining that the synthetic image is an outlier for the model:
causing additional of the episode training images to be processed to generate additional synthetic images that include the one or more variations; and
further training the model based on the additional synthetic images,
optionally wherein further training the model based on the additional synthetic images comprises:
training the model based on a synthetic episode that includes the synthetic image and the additional synthetic images.

12. The method of any one of the preceding claims,, further comprising:
in response to determining that the synthetic image is an outlier for the model:
causing additional of the training images to be processed to generate additional synthetic images that include the one or more variations; and
further training the model based on the additional synthetic images.

13. The method of any one of the preceding claims, wherein the one or more variations include a new object not present in the training image, a new lighting effect, a new background, and/or a different position of an object that is present in the training image.

14. A system comprising one or more processors and memory storing instructions that, when executed, cause the one or more processors to perform the method of any one of claims 1-13.

15. A non-transitory computer readable storage medium storing instructions that, when executed by one or more processors of a system, cause the system to perform the method of any one of claims 1-13.
